# EUROPEAN PATENT APPLICATION

(11) **EP 2 148 406 A2**
(43) Date of publication of application: **27.01.2010**
(21) Application number: 09251863.8
(22) Date of filing: 23.07.2009
(51) Int. Cl.: H02J 11/00

(54) **Power supply system, wireless communication system and illumination system**

(30) Priority: 23.07.2008 TW 97127931
(71) Applicant: GE Investment Co., Ltd., Songshan, Taipei 105 (TW)
(72) Inventor: Tsai, Wen-Kuei, Sin-Jhuang City Taipei County (TW)
(74) Representative: Oxley, Robin John George

(57) **Abstract**

A power supply system including a first power supply (210), a second power supply (220), a switch board (230), a relay device (240), and a control device (250) is provided. The switch board is electrically connected to the first power supply, and the relay device is electrically connected to the switch board. The relay device includes a first solid state relay (242) and a second solid state relay (244), which are electrically connected to the first power supply and the second power supply respectively. The control device includes a control unit (252) and a first power line communication unit (PLC unit) (254), in which the control unit is electrically connected to the second power supply, and the first PLC unit is electrically connected between the relay device and the second power supply, and the first PLC unit is electrically connected to the control unit.

## Description

### BACKGROUND OF THE INVENTION

### 1. Field of the Invention

The present invention generally relates to a power supply system, in particular, to a power supply system with a plurality of power supplies and a wireless communication system and an illumination system using the same.

### 2. Description of Related Art

Generally speaking, most of the electronic devices are powered by an external alternative power supply for operations. However, the reservation amount of petroleum on the earth is merely sufficient for being used for about 50 years, and the greenhouse effect caused by carbon dioxide also threads the environment of the earth, for example, the raising of the global sea level, global climate change, and the like. Therefore, the utilization and development of the clean energy have become the essential trend in the future, among which the solar energy is most prevailing and highly expected. In recent years, the photoelectric conversion efficiency of a solar cell is continuously and significantly enhanced, and the cost of the solar cell has been gradually reduced, and thus products equipped with solar cells have gradually been proposed.

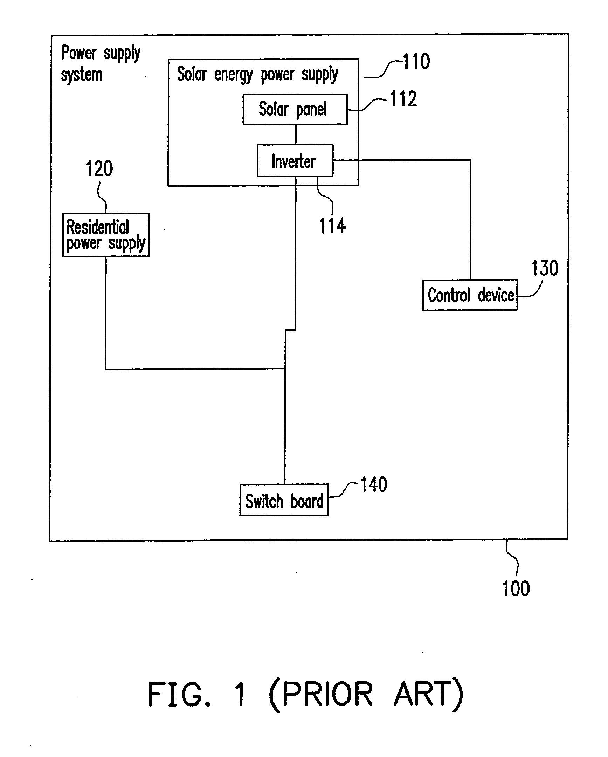

FIG. 1 is a schematic block diagram of a conventional power supply system using solar energy. Referring to FIG. 1, a conventional power supply system 100 includes a solar energy power supply 110, a residential power supply 120, a control device 130, and a switch board 140. The residential power supply 120 is connected to the switch board 140 to supply power, and the switch board 140 is, for example, responsible for distributing the power for a building, and distributing the electric power provided by the residential power supply 120 to each user.

The solar energy power supply 110 includes a solar panel 112 and an inverter 114, in which the solar panel 112 is used to convert sun lights into electric currents, and then, the electric currents are rectified by the inverter 114 and connected to the residential power supply 120 in parallel, and then output to the switch board 140. The control device 130 is electrically connected to the inverter 114 to control a magnitude of the electric currents output to the switch board 140 from the inverter 114.

However, the control device 130 of the conventional power supply system 100 is not electrically connected to the residential power supply 120 directly, so that even if a power failure occurs to the residential power supply 120, the control device 130 cannot get to know such a power failure. Therefore, once the power of the residential power supply 120 fails, the solar energy power supply 110 is over loaded, thus being easily damaged. Therefore, the inverter 114 needs to precisely determine the powering situation of the residential power supply 120, so as to avoid solitary-island effect. However, the rectifier capable of determining the powering situation adopted by the solar energy power supply 110 becomes rather expensive, and as a result, the cost of the power supply system 110 is increased.

### SUMMARY OF THE INVENTION

Accordingly, the present invention is directed to a power supply system having a better control capacity on a power supply.

The present invention is directed to a wireless communication system, which is power-saving.

The present invention is directed to an illumination system, which has desirable illumination effects.

As embodied and broadly described herein, the present invention provides a power supply system, which includes a first power supply, a second power supply, a switch board, a relay device, and a control device. The switch board is electrically connected the first power supply. The relay device is electrically connected to the switch board. The relay device includes a first solid state relay and a second solid state relay, which are electrically connected the first power supply and the second power supply respectively. The control device includes a control unit and a first power line communication unit (PLC unit). The control unit is electrically connected to the second power supply. The first PLC unit is electrically connected between the relay device and the second power supply, and the first PLC unit is electrically connected to the control unit.

In an embodiment of the present invention, the above second power supply includes a solar panel and a rectifier, in which the rectifier is electrically connected to the solar panel, the second solid state relay, and the first PLC unit.

In an embodiment of the present invention, the above second power supply further includes a battery electrically connected the solar panel and the rectifier.

In an embodiment of the present invention, the above switch board includes a plurality of first control switches and a plurality of second control switches. The first control switches are electrically connected to the first power supply, and the second control switches are electrically connected to the relay device.

In an embodiment of the present invention, the power supply system further includes a monitoring center electrically connected the control unit.

In an embodiment of the present invention, the control device further includes an independent power supply electrically connected to the control unit.

The present invention further provides a wireless communication system, which includes a power supply sub-system and a wireless communication network sub-system. The power supply sub-system includes a first power supply, a second power supply, a switch board, a relay device, and a control device. The switch board is electrically connected to the first power supply. The relay device is electrically connected to the switch board. The relay device includes a first solid state relay and a second solid state relay, which are electrically connected to the first power supply and the second power supply respectively. The control device includes a control unit and a first PLC unit. The control unit is electrically connected to the second power supply. The first PLC unit is electrically connected between the relay device and the second power supply, and the first PLC unit is electrically connected to the control unit. The wireless communication network sub-system includes a host and a plurality of nodes, in which the host is electrically connected to the control unit, and the nodes are connected to the host.

In an embodiment of the present invention, the above wireless communication system further includes a plurality of illumination devices connected to the switch board, and the nodes are configured in the illumination devices.

In an embodiment of the present invention, the above wireless communication network sub-system is a mesh network system.

In an embodiment of the present invention, the above wireless communication network sub-system is IEEE 802.15.4 ZigBee wireless communication system, an IEEE 802.15.4 ZigBee Pro wireless communication system or a Z-Wave wireless communication system.

In an embodiment of the present invention, the above second power supply includes a solar panel and a rectifier, in which the rectifier is electrically connected to the solar panel, the second solid state relay, and the first PLC unit.

In an embodiment of the present invention, the above second power supply further includes a battery electrically connected to the solar panel and the rectifier.

In an embodiment of the present invention, the above switch board includes a plurality of first control switches and a plurality of second control switches. The first control switches are electrically connected to the first power supply, and the second control switches are electrically connected to the relay device.

In an embodiment of the present invention, the above wireless communication system further includes a monitoring center electrically connected to the control unit.

In an embodiment of the present invention, the above control device further includes an independent power supply electrically connected to the control unit.

The present invention further provides an illumination system, which includes a power supply sub-system and a plurality of illumination devices. The power supply sub-system includes a first power supply, a second power supply, a switch board, a relay device, and a control device. The switch board is electrically connected to the first power supply. The relay device is electrically connected to the switch board. The relay device includes a first solid state relay and a second solid state relay, which are electrically connected to the first power supply and the second power supply respectively. The control device includes a control unit and a first PLC unit, in which the control unit is electrically connected to the second power supply, the first PLC unit is electrically connected between the relay device and the second power supply, and the first PLC unit is electrically connected to the control unit. The illumination devices are electrically connected to the switch board.

In an embodiment of the present invention, the above illumination devices include light-emitting diode (LED) light sources.

In an embodiment of the present invention, the above switch board includes a plurality of first control switches and a plurality of second control switches. The first control switches are electrically connected to the first power supply, and the second control switches are electrically connected to the relay device.

In an embodiment of the present invention, the above illumination devices are electrically connected to the second control switches.

In an embodiment of the present invention, the above second power supply includes a solar panel and a rectifier, in which the rectifier is electrically connected to the solar panel, the second solid state relay, and the first PLC unit.

In an embodiment of the present invention, the above second power supply further includes a battery electrically connected to the solar panel and the rectifier.

In an embodiment of the present invention, the illumination system further includes a wireless communication network sub-system. The wireless communication network sub-system includes a host and a plurality of nodes, in which the host is electrically connected to the control unit, and the nodes are configured in the illumination devices, and connected to the host.

In an embodiment of the present invention, the above wireless communication system further includes a plurality of illumination devices connected to the switch board, and the nodes are configured in the illumination devices.

In an embodiment of the present invention, the above wireless communication network sub-system is a mesh network system.

In an embodiment of the present invention, the above control device further includes an independent power supply electrically connected to the control unit.

In view of the above, the power supply system of the present invention is connected to the relay device through the first power supply, and the control device is connected to the relay device and the second power supply through the first PLC unit. Therefore, the control device gets to know the power generation situation of the second power supply via the rectifier, thereby further controlling the relay device, and switching the power supply for the switch board. That is to say, the control device determines the proportion for supplying power to the switch board by the first power supply and the second power supply according to the powering situations of the first power supply and the second power supply. In this way, it can save the power and make the configurations of the first and second power supplies become more flexible.

In an embodiment of the present invention, the above illumination system further includes a monitoring center electrically connected to the control unit.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic block diagram of a conventional power supply system using solar energy.

FIG. 2 is a schematic block diagram of a power supply system according to an embodiment of the present invention.

FIGs. 3a and 3b are block diagrams of other implementation manners of a second power supply shown in FIG. 2.

FIG. 4 is a block diagram of another implementation manner of a relay device shown in FIG. 2.

FIG. 5 is a schematic block diagram of a wireless communication system according to an embodiment of the present invention.

FIG. 6 is a schematic block diagram of an illumination system according to an embodiment of the present invention.

FIG. 7 is a schematic block diagram of an illumination system according to anther embodiment of the present invention.

FIG. 8 is a schematic block diagram of a monitoring system according to an embodiment of the present invention.

FIG. 9 is a schematic block diagram of a monitoring system according to another embodiment of the present invention.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

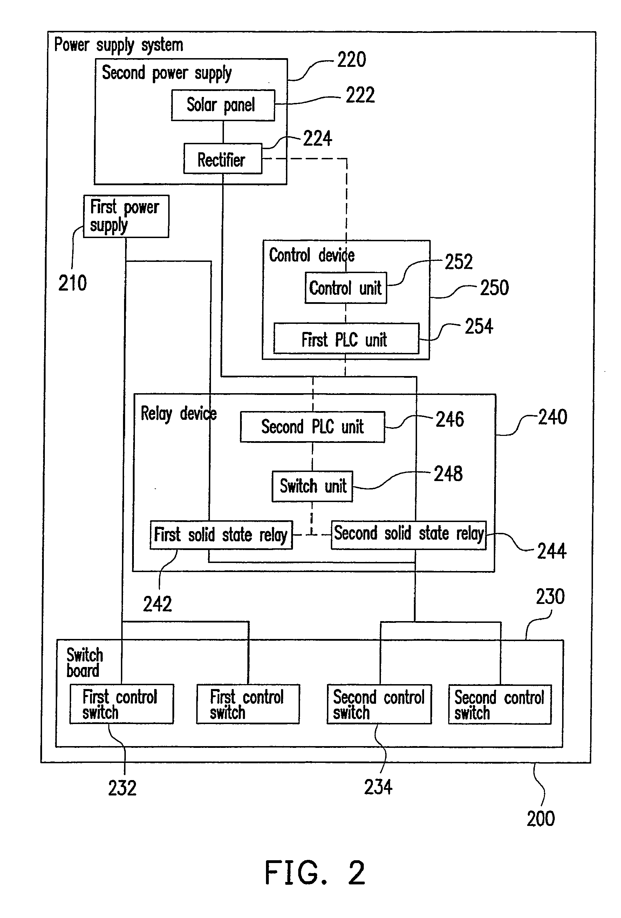

FIG. 2 is a schematic block diagram of a power supply system according to an embodiment of the present invention. Referring to FIG. 2, a power supply system 200 includes a first power supply 210, a second power supply 220, a switch board 230, a relay device 240, and a control device 250.

The switch board 230 is electrically connected to the first power supply 210. The relay device 240 is electrically connected to the switch board 230. The relay device 240 includes a first solid state relay 242, a second solid state relay 244, a second power line communication unit (PLC unit) 246, and a switch unit 248. The first solid state relay 242 and the second solid state relay 244 are electrically connected to the first power supply 210 and the second power supply 220 respectively, and the second PLC unit 246 is electrically connected to the second power supply 220 and the switch unit 248.

The control device 250 includes a control unit 252 and a first PLC unit 254. The control unit 252 is electrically connected to the second power supply 220, the first PLC unit 254 is electrically connected between the relay device 240 and the second power supply 220, and the first PLC unit 254 is electrically connected to the control unit 250. The first PLC unit 254 and the second PLC unit 246 transfer signals with each other, so as to control the switch unit 248 to switch the power supplied to the first solid state relay 242 and the second solid state relay 244. In addition, the control device 250 further includes an independent power supply 256. The independent power supply 256 may be a battery or a super capacitor, for ensuring the normal operation of the control unit 252 under an emergency when a power failure occurs to both the first power supply 210 and the second power supply 220.

In this embodiment, the power supply system 200 may be applied to a power supply system of a huge building, in which the first power supply 210 may be a residential power supply, for example, a power supply provided by a power generator or a power plant, and the second power supply 220 may be an auxiliary power supply, for example, a solar energy power supply. For example, the second power supply 220 may include a solar panel 222 and a rectifier 224, and the rectifier 224 is electrically connected to the solar panel 222, the second solid state relay 244, and the first PLC unit 254. In the present embodiment, the rectifier 224 may be an inverter for rectifying DC power to AC power or a rectifying unit for rectifying DC power to another DC power if required.

In addition, the switch board 230 may include a plurality of first control switches 232 and a plurality of second control switches 234. The first control switches 232 are electrically connected to the first power supply 210, and the second control switches 234 are electrically connected to the relay device 240. Particularly, the first control switches 232 are used to, for example, supply power to the electronic devices that consume large amount of electricity, such as air-conditioning system; whereas the second control switches 234 are used to supply power to the electronic devices that consume less electricity, such as illumination devices for emergency ladder.

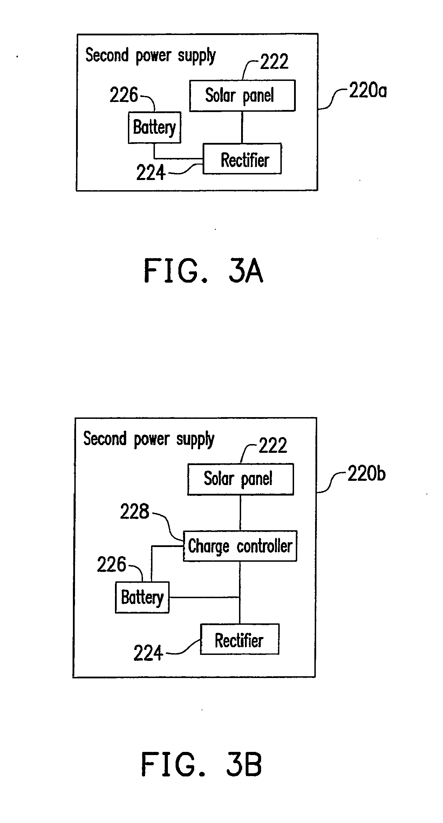

It should be noted that, besides the above implementation manner, the second power supply may be implemented in other ways. FIGs. 3a and 3b are block diagrams of other implementation manners of the second power supply shown in FIG. 2. Referring to FIGs. 2, 3a, and 3b, as shown in FIG. 3a, the second power supply 220a further includes a battery 226 electrically connected to the rectifier 224. In this way, the battery 226 is used to store the electric currents generated by the solar panel 222 through the rectifier 224 for emergency use. Furthermore, as shown in FIG. 3b, the second power supply 220b further includes a charge controller 228 electrically connected among the solar panel 222, the battery 226, and the rectifier 224, so as to control the proportion of the power supplied to the battery 226 and the rectifier 224 by the solar panel 222.

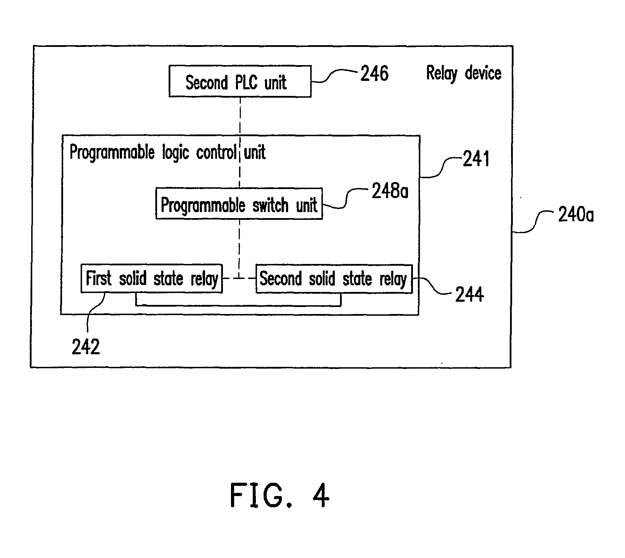

In addition, the relay device may be implemented in other ways. FIG. 4 is a block diagram of another implementation manner of the relay device shown in FIG. 2. Referring to FIGs. 2 and 4, the relay device 240a includes, for example, a programmable logic control unit 241 electrically connected to the second PLC unit 246. The programmable logic control unit 241 may be a commercially-available programmable logic control unit, which includes, for example, a programmable switch unit 248a, a first solid state relay 242, and a second solid state relay 244. The programmable switch unit 248a receives a command from the second PLC unit 246 to switch the power supplied to the first solid state relay 242 and the second solid state relay 244.

The power supply system 200 of the present invention includes the relay device 240 and the first PLC unit 254, the first power supply 210 is electrically connected to the relay device 240, and the control device 250 is connected to the relay device 240 and the second power supply 220 through the first PLC unit 254. Therefore, the control device 250 gets to know the powering situation of the second power supply 220 through the rectifier 224, so as to further control the power supplied to the switch board 230 by the first power supply 210 and the second power supply 220 through the relay device 240. Particularly, the control device 250 determines a proportion for supplying power to the switch board 230 by the first power supply 210 and the second power supply 220 according to powering situations of the first power supply 210 and the second power supply 220, which not only saves the power, but also makes the configurations of the first power supply 210 and the second power supply 220 become more flexible.

For example, if there are sufficient sun lights, the control device 250 may configure the second power supply 220 to be used for powering the illumination systems in each floor of the building, whereas if there are insufficient sun lights, the electric quantity of the second power supply is insufficient for powering the illumination systems in the whole building, the control device 250 configures the second power supply 220 to be used for powering the importation illumination devices, for example, illuminations in the lobby. In this way, the second power supply 220 is used in a high efficiency, so that the consumption of the first power supply 210 is reduced, thereby saving the power.

Furthermore, in the above embodiment, a common rectifier 224 is used together with the control device 250 and the relay device 240, so as to achieve a function of assigning the first power supply 210 and the second power supply 220. Therefore, no high-specification rectifier is required, so that the cost of the power supply system is reduced.

Furthermore, in the above embodiment, the first power supply 210 and the second power supply 220 do not need to be connected in parallel. That is to say, when the architecture of the above embodiment is applied to a huge building, the solar energy power supply and the residential power supply do not need to be connected with each other in parallel, which prevents the first power supply 210 and the second power supply 220 from interfering each other.

The power supply system 200 in the above embodiment may be used together with other systems, for example, used together with a wireless communication network system, an illumination device, or a monitoring center in the building. The following embodiments are illustrated as examples for demonstrating other applications of the power supply system 200.

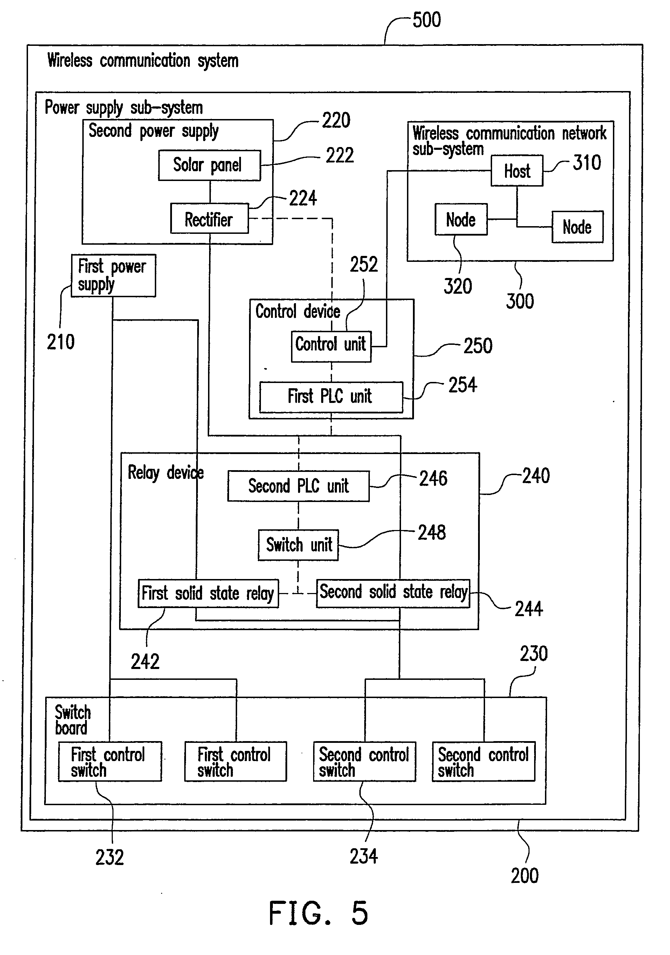

FIG. 5 is a schematic block diagram of a wireless communication system according to an embodiment of the present invention. Referring to FIG. 5, a wireless communication system 500 includes a power supply sub-system (that is, the above power supply system) 200 and a wireless communication network sub-system 300. The wireless communication network sub-system 300 includes a host 310 and a plurality of nodes 320, in which the host 310 is electrically connected to the control unit 252, and the nodes 320 are connected to the host 310. For example, the wireless communication network sub-system 300 may be a mesh network system, for example, an IEEE 802.15.4 ZigBee wireless communication system, an IEEE 802.15.4 ZigBee Pro wireless communication system or a Z-Wave wireless communication system. In this embodiment, the nodes 320 may be configured in the illumination devices in the building, so as to form a mesh network system. The wireless communication system 500 may be powered by the second power supply 220, so as to achieve a power-saving effect. Furthermore, the wireless communication system 500 may get to known the information about the distribution of the persons in the building through the wireless communication network sub-system 300, so as to inform the power supply sub-system 200, so that the power supply sub-system 200 controls the powering situation according to the distribution of the persons. Furthermore, in another embodiment (not shown), the host and each node have an independent power supply, so as to ensure that the wireless communication network sub-system can still work normally under an emergency.

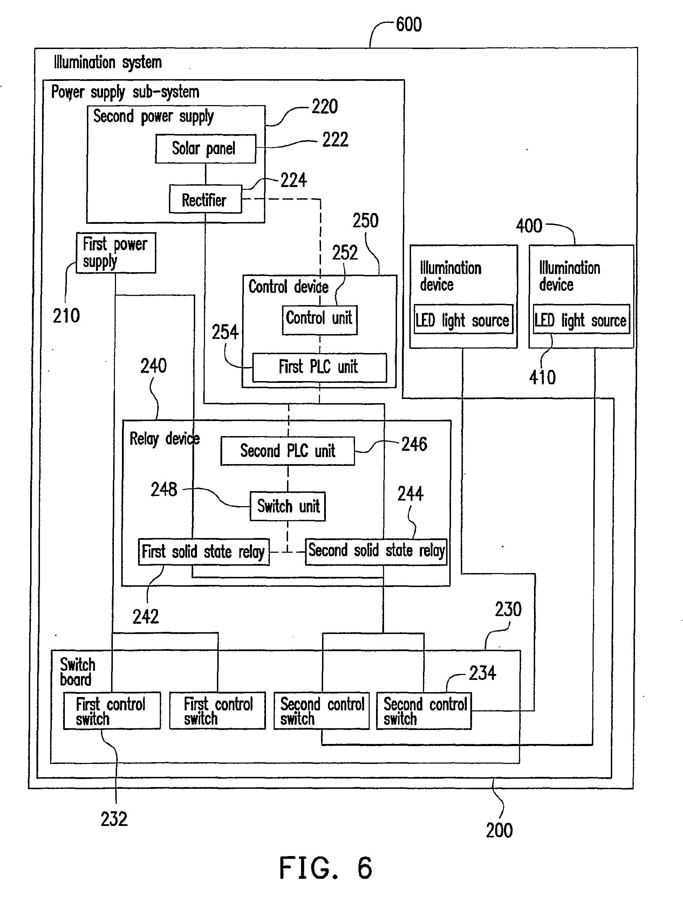

FIG. 6 is a schematic block diagram of an illumination system according to an embodiment of the present invention. It should be noted that, the embodiment is partially similar to that of FIG. 5, and in this embodiment and the embodiment shown in FIG. 5, the same or like reference numerals represent the same or like elements. The differences between the two embodiments are described below in detail, and the same features thereof are not described any more.

Referring to FIG. 6, an illumination system 600 includes a power supply sub-system 200 and a plurality of illumination devices 400, in which each illumination device 400 may include an LED light source 410. The illumination device 400 may be electrically connected to the second control switches 234, and the relay device 240 and the switch board 230 assign the electric power of the first power supply 210 and the second power supply 220 to the illumination devices 400 for illumination. In this way, if the power failure occurs to the first power supply 210, the control device 250 may control the relay device 240 to maintain the emergency power supply of the illumination devices 400 by the second power supply 220.

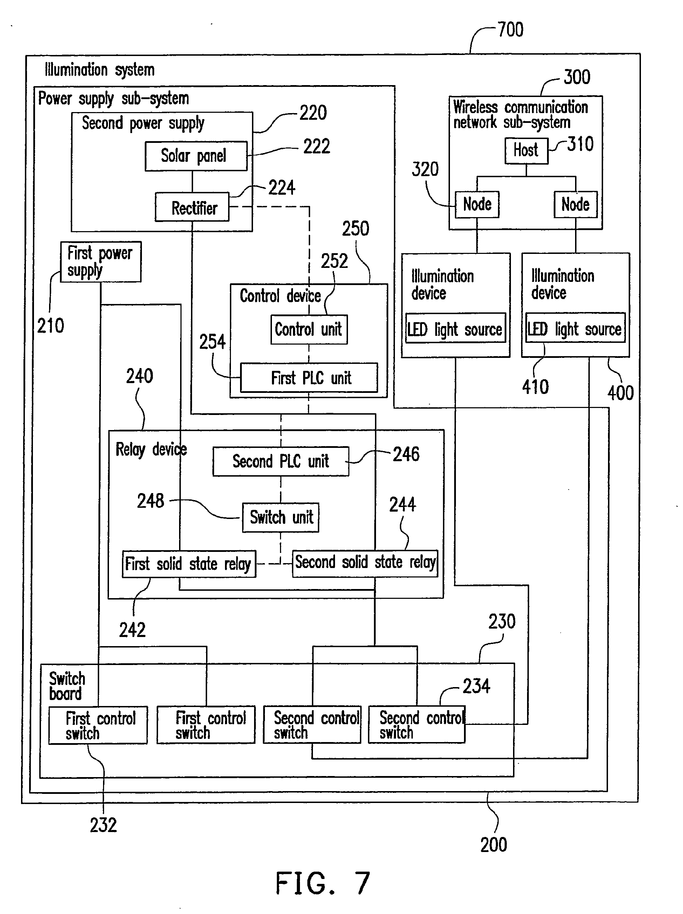

In addition, the illumination system is used together with the above wireless communication network sub-system 300. FIG. 7 is a schematic block diagram of an illumination system according to anther embodiment of the present invention. It should be noted that, this embodiment is partially similar to the embodiment shown in FIG. 6, and in this embodiment and the embodiment shown in FIG. 6, the same or like reference numerals represent the same or like elements. The differences between the two embodiments are described below in detail, and the same features thereof are not described any more.

Referring to FIG. 7, compared with the illumination system 600, an illumination system 700 further includes a wireless communication network sub-system 300, and the nodes 320 may be configured in the illumination devices 400, and the illumination devices 400 are used to provide electric power to the nodes 320.

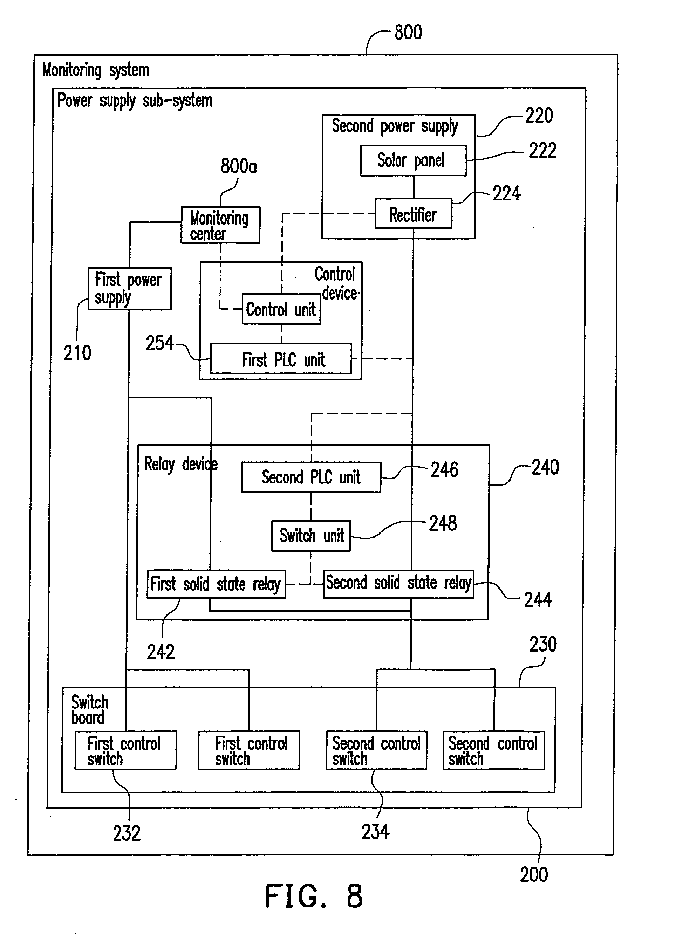

FIG. 8 is a schematic block diagram of a monitoring system according to an embodiment of the present invention. Referring to FIG. 8, a monitoring system 800 includes a power supply sub-system 200 and a monitoring center 800a. The monitoring center 800a is, for example, a monitoring system of a building, which is electrically connected to and monitors the ionization smoke detector, fire alarm, access control system, communication system and the like. In this way, the monitoring center 800a informs the control unit 252 to make corresponding response according to the detected results.

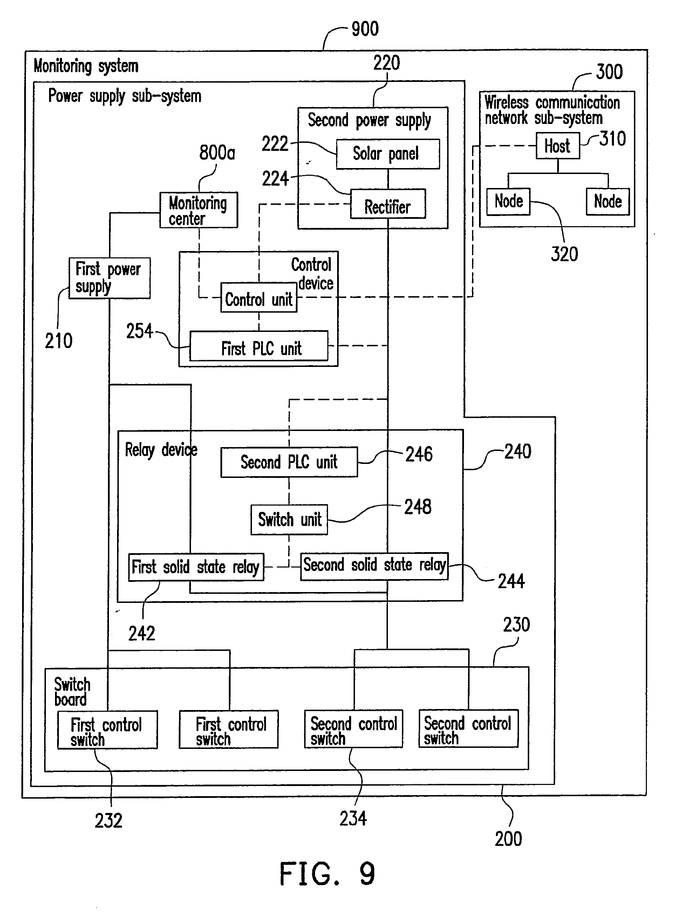

Furthermore, the monitoring system is used together with the above wireless communication network sub-system 300 (see FIG. 7), as well as the illumination devices 400 (see FIG. 7) and the like. FIG. 9 is a schematic block diagram of a monitoring system according to another embodiment of the present invention. It should be noted that, this embodiment is partially similar to the embodiment shown in FIG. 8, and in this embodiment and the embodiment shown in FIG. 8, the same or like reference numerals represent the same or like elements. The differences between the two elements are described below in detail, and the same features thereof are not described any more.

Referring to FIG. 9, a monitoring system 900 further includes a wireless communication network sub-system 300 connected to the control unit 252. It should be noted that, although the monitoring system having the wireless communication network sub-system 300 is taken as an example in this embodiment, those skilled in the art may implement the monitoring system together with other systems, for example, the monitoring system is used together with the above illumination devices 400, or used together with both the wireless communication network sub-system 300 and the illumination devices 400.

To sum up, in the above embodiments, the power supply system includes the relay device and the first PLC unit, the first power supply is electrically connected to the relay device, and the control device is connected to the relay device and the second power supply through the first PLC unit, and thus, the control device gets to known the powering situation of the second power supply, gets to know the powering situation of the first power supply through the relay device, and further controls the power supplied to the switch board by the first and second power supplies through the relay device.

Furthermore, the power supply system may be used together with the wireless communication network sub-system, so that the wireless communication system saves more power. Furthermore, the power supply system may be used together with the illumination devices, so as to enhance the illuminating effect of the illumination devices. In addition, the power supply system is further used together with the monitoring center, so as to deal with the situations occurring in the building.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A power supply system, comprising:
a first power supply;
a second power supply;
a switch board, electrically connected to the first power supply;
a relay device, electrically connected to the switch board, wherein the relay device comprises:
a first solid state relay, electrically connected to the first power supply;
a second solid state relay, electrically connected to the second power supply;
a control device, comprising:
a control unit, electrically connected to the second power supply; and
a first power line communication unit (PLC unit), electrically connected between the relay device and the second power supply and electrically connected to the control unit.

2. The power supply system according to claim 1, wherein the second power supply comprises:
a solar panel; and
a rectifier, electrically connected to the solar panel, the second solid state relay, and the first PLC unit.

3. The power supply system according to claim 1 or 2, wherein the switch board comprises:
a plurality of first control switches, electrically connected to the first power supply; and
a plurality of second control switches, electrically connected to the relay device.

4. The power supply system according to any preceding claim, further comprising a monitoring center electrically connected to the control unit.

5. A wireless communication system, comprising:
a power supply sub-system, comprising:
a first power supply;
a second power supply;
a switch board, electrically connected to the first power supply;
a relay device, electrically connected to the switch board, wherein the relay device comprises:
a first solid state relay, electrically connected to the first power supply;
a second solid state relay, electrically connected to the second power supply;
a control device, comprising:
a control unit, electrically connected to the second power supply;
a first power line communication unit (PLC unit), electrically connected between the relay device and the second power supply, and electrically connected to the control unit;
a wireless communication network sub-system, comprising:
a host, electrically connected to the control unit; and
a plurality of nodes, connected to the host.

6. The wireless communication system according to claim 5, further comprising a plurality of illumination devices, connected to the switch board, wherein the nodes are configured at the illumination devices.

7. The wireless communication system according to claim 5 or 6, wherein the second power supply comprises a solar panel and a rectifier electrically connected to the solar panel, and the second solid state relay and the first PLC unit are electrically connected to the rectifier.

8. The wireless communication system according to any of claims 5 to 7, wherein the switch board comprises a plurality of first control switches and a plurality of second control switches electrically connected to the first power supply and the relay device respectively.

9. The wireless communication system according to any of claims 5 to 8, further comprising a monitoring center electrically connected to the control unit.

10. An illumination system, comprising:
a power supply sub-system, comprising:
a first power supply;
a second power supply;
a switch board, electrically connected to the first power supply;
a relay device, electrically connected to the switch board, wherein the relay device comprises:
a first solid state relay, electrically connected to the first power supply;
a second solid state relay, electrically connected to the second power supply;
a control device, comprising:
a control unit, electrically connected to the second power supply;
a first power line communication unit (PLC unit), electrically connected between the relay device and the second power supply, and electrically connected to the control unit; and
a plurality of illumination devices, electrically connected to the switch board.

11. The illumination system according to claim 10, wherein the illumination devices comprise a light emitting diode (LED) light source.

12. The illumination system according to claim 10 or 11, wherein the switch board comprises a plurality of first control switches and a plurality of second control switches electrically connected to the first power supply and the relay device respectively.

13. The illumination system according to any of claims 10 to 12, wherein the second power supply comprises a solar panel and a rectifier electrically connected to the solar panel, and the second solid state relay and the first PLC unit are electrically connected to the rectifier.

14. The illumination system according to any of claims 10 to 13, further comprising a wireless communication network sub-system, and the wireless communication network sub-system comprising:
a host, electrically connected to the control unit;
a plurality of nodes, configured on the illumination devices and connected to the host.

15. The illumination system according to any of claims 10 to 14, wherein the control device further comprises an independent power supply electrically connected the control unit.
